# EUROPÄISCHE PATENTSCHRIFT

(11) **EP 0 883 723 B1**
(45) Veröffentlichungstag und Bekanntmachung des Hinweises auf die Patenterteilung: **12.01.2000**
(21) Anmeldenummer: 97903383.4
(22) Anmeldetag: 26.02.1997
(51) Int. Cl.: E05D 15/52, B23P 21/00, E05B 17/00

(54) **TREIBSTANGENBESCHLAG-MONTAGESATZ**
CONNECTION ROD FITTING ASSEMBLY SET
KIT DE MONTAGE DE FERRURE A TIGE DE MANOEUVRE

(30) Priorität: 27.02.1996 DE 19607366
(43) Veröffentlichungstag der Anmeldung: 16.12.1998
(73) Patentinhaber: Aug. Winkhaus GmbH & Co. KG, 48291 Telgte (DE)
(72) Erfinder: MONREAL, Hans-Peter, D-48155 Münster (DE)
(74) Vertreter: Prechtel, Jörg, Dipl.-Phys. Dr.
(86) Internationale Anmeldenummer: EP9700929
(87) Internationale Veröffentlichungsnummer: WO9732100

(56) Entgegenhaltungen:
- EP-A- 0 683 296
- EP-A- 0 683 297
- DE-A- 2 242 305

## Beschreibung

Die Erfindung betrifft einen Treibstangenbeschlag-Montagesatz für den Flügel eines Dreh-Kipp-Fensters oder einer Dreh-Kipp-Tür.

Treibstangenbeschläge am Flügel (zumeist in Form eines Flügelrahmens) dienen der wahlweisen Einstellung unterschiedlicher Beschlagsfunktionen, insbesondere schließfunkzion, Drehfunktion und Dreh-Kipp-Funktion, wobei Eckumlenkungen dafür sorgen, daß treibszangenfeste Riegelelemente längs mehrerer Rahmenholme in gewünschter Weise bewegt werden können, und zwar ausgehend von einem zentralen betätigungsglied. Dieses besteht im Falle eines manuellen Treibstangenbeschlags aus dem Handgriff und im Falle eines motorgetriebenen Treibstangenbeschlags aus dem jeweiligen antriebsmotor. Die treibstangenfesten Riegelelemente wirken mit festrahmenseitigen Beschlägen, insbesondere Schließblechen, zusammen oder auch mit einer Ausstelleinrichtung, insbesondere Ausstellschere. Die entsprechenden Flügel (bzw. Flügelrahmen) aus Holz, Kunststoff, Stahl, Aluminium oder Verbundsystemen weisen zumeist eine Rahmenfalz-Umfangsnut auf zur Aufnahme der Eckumlenkungen sowie der diese verbindenden Elemente aus jeweils einer Treibstange zur Kraftübertragung una in vielen Fällen auch einer Stulpschiene. Der Eckwinkel der jeweiligen Eckumlenkung sowie die Stulpschienen decken die ggf. gestufte Flügelfalz-Umfangsnut ab, so daß sich ein gefälliges Aussehen ergibt bei geringer Verschmutzungsgefahr.

Derartige Beschläge haben sich bewährt. Auch eignen sie sich sowohl für die manuelle, die teilautomatische oder auch vollautomatische Montage, wenn sie entsprechend der EP 0 683 297 A1 ausgebildet sind, die einen Treibstangenbeschlag-Montagesatz nach dem Oberbegriff des Anspruchs 1 zeigt. Hierbei werden als erstes die bangleichen Eckumlenkungen montiert. Anschließend werden die einstückigen Funktionseinheiten (Oberschiene mit Ausstelleinrichtung; Kantengetriebe) am jeweiligen Rahmenholm angeschlagen. Falls dieser Rahmenholm an seinen beiden Enden jeweils mit einer Eckumlenkung versehen ist, erstrecken sich die Funktionseinheiten über die Holmlänge zur unmittelbaren Verbindung dieser beiden Eckumlenkungen. Die Kuppelelemente an den Enden der Eckumlenkungen sowie die Kuppelgegenelemente an den Enden der Funktionseinheiten sind derart ausgebildet, daß nach dem erfolgten Anschlag der Eckumlenkungen die Funktionseinheit lediglich noch in Richtung zur Flügelfalz-Umfangsfläche hin an den Flügel heran gebracht werden muß mit entsprechender gegenseitiger Überdeckung der Kupplungselemente und Kupplungsgegenelemente, woraufhin diese ohne weitere Maßnahmen in gegenseitigen Kupplungseingriff gelangen.

Diese Bauweise hat sich zumindest bei nicht allzu großen Flügeln mit Standardmaßen bewährt. Bei großen Flügeln lassen sich die entsprechend langen, sich unter Umständen durchbiegenden Funktionseinheiten jedoch nur schwer handhaben, was vor allem die montageautomatenunterstützte Montage erschwert. Auch werden häufig Fenster oder Türen mit von Standardmaßen abweichenden Abmessungen verlangt. Die Funktionseinheiten müssen dann mit der in Frage kommenden Maximallänge bereitgehalten werden, wobei dann die jeweiligen Funktionseinheiten in Anpassung an die tatsächlich gewünschte Länge zu verkürzen (abzulängen) sind. Die Funktionseinheiten, Kantengetriebe bzw. Oberschiene mit einer Ausstelleinrichtung, müssen dabei an beiden Enden abgelängt werden, um die korrekte Lage von Kantengetriebe bzw. Ausstelleinrichtung am Flügel sicherzustellen. Will man die Materialausnutzung verbessern und die Abfallmenge gleichzeitig verringern, bietet sich an, die Funktionseinheiten in unterschiedlichen Grundlängen bereitzuhalten. Damit wird jedoch die Vielzahl der bereizzuhaltenden Teile wiederum erhöht mit entsprechend erhöhten Kosten.

Aus der DE-OS 22 42 305 ist ein Beschlagsystem bekannt, bei dem kürzere Baueinheiten dadurch gebildet werden, daß zwischen die Eckumlenkungen und das Kantencetriebe Riegelschieber sowie an die jeweilige Flügellänge anzupassende Treibstangenstücke eingesetzt werden. Die Riegelschieber sind an ihrem einen Ende mit einem flügelnahen Koppelelement und am anderen Ende mit einem flügelferneren Koppelgegenelement versehen. Die Eckumlenkungen sind an ihren beiden Enden jeweils mit einem flügelferneren Kupplungsgegenelement versehen ebenso wie das Treibstangen-Kantengetriebe. Diese Beschlagsteile werden in eine hinterschnittene Nut an der jeweiligen Flügelfalz-Umfangsfläche eingeschoben, nachdem sie vorher miteinander verkuppelt worden sind. Eine montageautomatenunterstützte Montage entsprechend der EP 0 683 297 A1 kommt daher nicht in Frage. Auch ist die Anzahl der bereitzuhaltenden Beschlagteile immer noch relativ groß.

Der Erfindung liegt die Aufgabe zugrunde, einen Treibstangenbeschlag-Montagesatz bereitzustellen, der bei erleichterter, von Automaten durchzuführende Montage mit einer geringen Anzahl unterschiedlicher Teile auskommt.

Diese Aufgabe wird gelöst durch einen Treibstangenbeschlag-Montagesatz für den Flügel eines Dreh-Kipp-Fensters oder einer Dreh-Kipp-Tür gemäß Anspruch 1.

Das erfindungsgemäße Beschlagsystem eignet sich gleichermaßen für die manuelle, die teilautomatische oder die vollautomatische Montage. Dabei kann jede Fenstergröße (ab einer bestimmten Mindestgröße) mit den insgesamt lediglich vier verschiedenen Einheiten, nämlich Eckumlenkung, Oberschiene, Treibstangen-Antriebseinheit und Verbindungseinheit, durch entsprechende Kombination mit einer unterschiedlichen Anzahl von Verbindungseinheiten (ggf. auch von Eckumlenkungen) realisiert werden. Dabei wird stets nur an den Verbindungseinheiten eine Längenanpassung an die jeweiligen Rahmenabmessungen vorgenommen, und zwar durch Ablängen nur an einem Ende.

Dadurch, daß auch mehrere Verbindungseinheiten in Reihe hintereinander zwischengeschaltet werden können (z.B. zwischen der Treibstangen-Antriebseinheit und einem oder beiden drehachsenfernen Eckumlenkungen), ist es nicht erforderlich, lange Verbindungseinheiten bereitzustellen, wie diese an sich für große Fenster notwendig wären. Damit wird auch übermäßiger Verschnitt bei kleineren Fenstern vermieden. Da der erfindungsgemäße Treibstangenbeschlag lediglich aus vier verschiedenen und dabei noch relativ kurzen Elementen besteht, eignet er sich in besonderer Weise für die halb- oder vollautomatische Montage. Hierzu trägt auch bei, daß, wie bereits angeführt, stets nur gleiche Teile (Verbindungseinheit) einseitig abzulängen sind. Das Ablängmaß ergibt sich bereits aus der Programmierung der Fensterfertigungsstraße, so daß auch der Ablängvorgang einfach zu automatisieren ist. Schließlich bleibt der elementare Vorteil gemäß der erwähnten EP 0 638 297 A1 erhalten, der darin besteht, daß alle Teile nacheinander von außen her dem Rahmen zugeführt werden können mit selbsttätiger Kopplung aufgrund der beschriebenen Art der Ausbfidung der Kopplungselemente und Kopplungsgegenelemente.

Nach dem Anbringen der Eckumlenkungen werden also die Verbindungseinheiten angebracht, wobei sich selbsttätig gegenseitiger Kupplungseingriff zwischen Eckumlenkung und Verbindungseinheit ergibt. Entsprechendes gilt für die nachfolgende Montage der Treibstangen-Antriebseinheit bzw. der Oberschiene. Dabei ist für die Erfindung charakteristisch, daß die Verbindungseinheiten an ihren Enden ungleiche Kupplungsteile aufweisen, so daß sie durch Hintereinanderreihung beliebig verlängert werden können. Die Ankopplung mit den Eckumlenkungen ist unproblematisch, da diese als erstes angeschlagen werden. Schließlich ist auch eine unmittelbare Kopplung von Eckumlenkung und Treibstangen-Antriebseinheit bzw. Eckumlenkung und Oberschiene möglich, so daß von daher größere Gestaltungsfreiheit gegeben ist. So kann bei besonders hoch gelegenen und daher schlecht erreichbaren Fenstern der Handgriff mit der Treibstangen-Antriebseinheit nach unten verlegt werden mit unmittelbarer Ankopplung an die untere drehachsenferne Eckumlenkung. Zwischen der Treibstangeneinheit und der drehachsenfernen oberen Eckumlenkung können dann zwei miteinander gekoppelte Verbindungseinheiten eingesetzt werden.

Die Kupplungsteile können unterschiedlich ausgeformt sein. So können Kupplungselement und Kupplungsgegenelement von der Kombination eines zur Flügelfalzumfangsrichtung senkrechten Kupplungsstiftes und einer zugeordneten Kupplungsausnehmung gebildet sein. Besonders bevorzugt ist jedoch vorgesehen, daß das Kupplungselement von einer in Richtung weg von der Rahmenfalz-Umfangsfläche offenen Zahnbettkupplung und das Kupplungsgegenelement von einer ablängbaren Kupplungsverzahnung gebildet ist. Die Ausführungsform hat den Vorteil, daß von vorneherein eine entsprechend lange Kupplungsverzahnung vorgesehen sein kann, die dann der gewünschten Länge entsprechend gekürzt wird. Die gekürzte Kupplungsverzahnung kann ohne weitere Maßnahmen unmittelbar mit der Zahnbettkupplung verbunden werden, indem die Kupplungsverzahnung von außen her (in Richtung senkrecht zur Flügelfalzumfangsfläche) in die offene Zahnbettkupplung eingelegt wird.

Die Eckumlenkungen können entsprechend der DE 44 17 842 A1 mit Riegelvorsprüngen versehen sein, die mit dem kraftübertragenden Treibelement der Eckumlenkung bewegbar sind, um mit entsprechenden festrahmenseitigen Beschlagselementen, wie Schließblechen, zusammenzuwirken. Darüber hinaus weisen auch die Verbindungseinheiten vorteilhafterweise jeweils wenigstens einen treibstangenfesten Riegelvorsprung auf, welchem wiederum ein entsprechendes festrahmenseitiges Schließblech zugeordnet ist. Dies gibt verbesserte Abdichtung des geschlossenen Flügels sowie erhöhten Einbruchschutz. Auch lassen sich ohne weiteres besonders große Flügelgrößen realisieren. Insgesamt können somit die unterschiedlichsten Fenstergrößen und Fensterausführungen ggf. vollautomatisch hergestellt werden, wobei der Montageautomat nicht umgerüstet werden muß und mit lediglich vier Magazinen für die vier unterschiedlichen Einheiten des Beschlags zu bestücken ist.

Die Erfindung betrifft ferner ein Fenster oder eine Tür, versehen mit einem Treibstangenbeschlag wie vorstehend beschrieben.

Schließlich betrifft die Erfindung auch ein Verfahren zur Montage des vorstehend beschriebenen Montagesatzes, welches dadurch gekennzeichnet ist, daß zuerst alle Eckumlenkungen montiert werden, daß dann alle entsprechend den jeweiligen Flügelabmessungen einseitig abgelängten Verbindungseinheiten montiert werden und daß schließlich die Oberschiene und die Treibstangen-Antriebseinheit montiert werden.

Die Erfindung wird im folgenden an bevorzugten Ausführungsbeispielen anhand der Zeichnung erläutert. Es zeigt:
- Fig. 1: eine vereinfachte isometrische Ansicht eines mit dem erfindungsgemäßen Beschlagsystem versehenen Fensters in Kippöffnungsstellung;
- Fig. 2: die Teile eines am Flügel des Fensters gemäß Figur 1 anzuschlagenden Treibstangenbeschlags in explosionsartiger Darstellung;
- Fig. 3: den Treibstangenbeschlag gemäß Figur 2 im montierten Zustand am Flügel;
- Fig. 3A: einen Detailschnitt der Anordnung in Figur 3 nach Linie IIIA-IIIA;
- Fig. 4: eine Darstellung ähnlich Figur 3, jedoch mit nach unten verlagertem Treibstangen-Kantengetriebe und
- Fig. 5: eine Darstellung ähnlich den Figuren 3 und 4 mit jeweils paarweise gekoppelten Verbindungseinheiten an einem besonders großen Flügel.

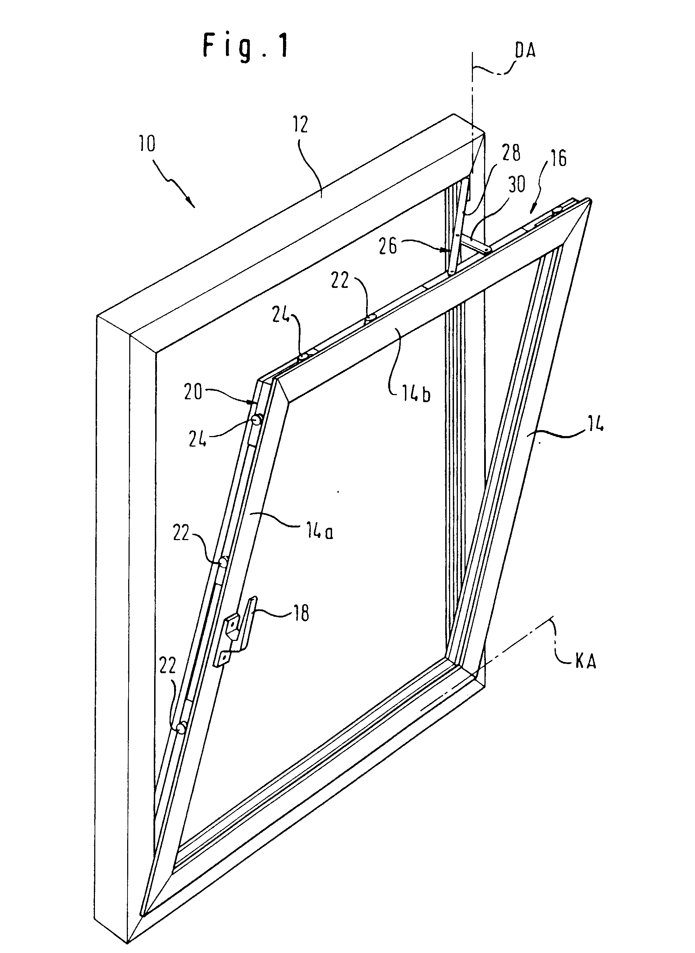

In Figur 1 ist ein allgemein mit 10 bezeichnetes Fenster vereinfacht dargestellt. Man erkennt einen Festrahmen (oder Blendrahmen) 12 sowie einen Flügelrahmen 14, die aneinander über ein allgemein mit 16 bezeichnetes Beschlagsystem gehalten sind mit der Möglichkeit, den Flügelrahmen 14 aus einer nicht dargestellten Schließstellung in die dargestellte Kippstellung aufzukippen mit Kippachse KA gemäß Figur 1 oder um eine Drehachse DA aufzudrehen. Die entsprechenden Beschlagsfunktionen werden über einen Handgriff 18 an einem drehachsenfernen Holm 14a des Festrahmens 14 eingestellt. Der Handgriff 18 wirkt dabei auf einen allgemein mit 20 bezeichneten Treibstangenbeschlag des Flügelrahmens 14 ein. In an sich bekannter Weise wirken am Treibstangenbeschlag ausgebildete Riegelvorsprünge 22 und 24 mit nicht dargestellten Schließblechen am Festrahmen 12 zusammen, um die genannten Beschlagsfunktionen zu realisieren. Eine Ausstelleinrichtung in Form einer Ausstellschere 26 aus Ausstellarm 28 und Verbindungslenker 30 sorgt für eine Kippwinkelbegrenzung.

Das obere Drehlager kann, wie hinlänglich bekannt, vom festrahmenseitigen Ende des Ausstellarms 28 gebildet sein und das untere Drehlager von einem in Figur 1 nicht dargestellten Ecklager. Es wird beispielsweise verwiesen auf die DE 44 17 842 A1. Hierin ist auch im einzelnen erläutert, wie der Ausstellarm 28 mit Hilfe des Treibstangenbeschlags am oberen Horizontalholm 14b des Festrahmens 14 festgelegt werden kann, um die Drehöffnungsfunktion zu erhalten.

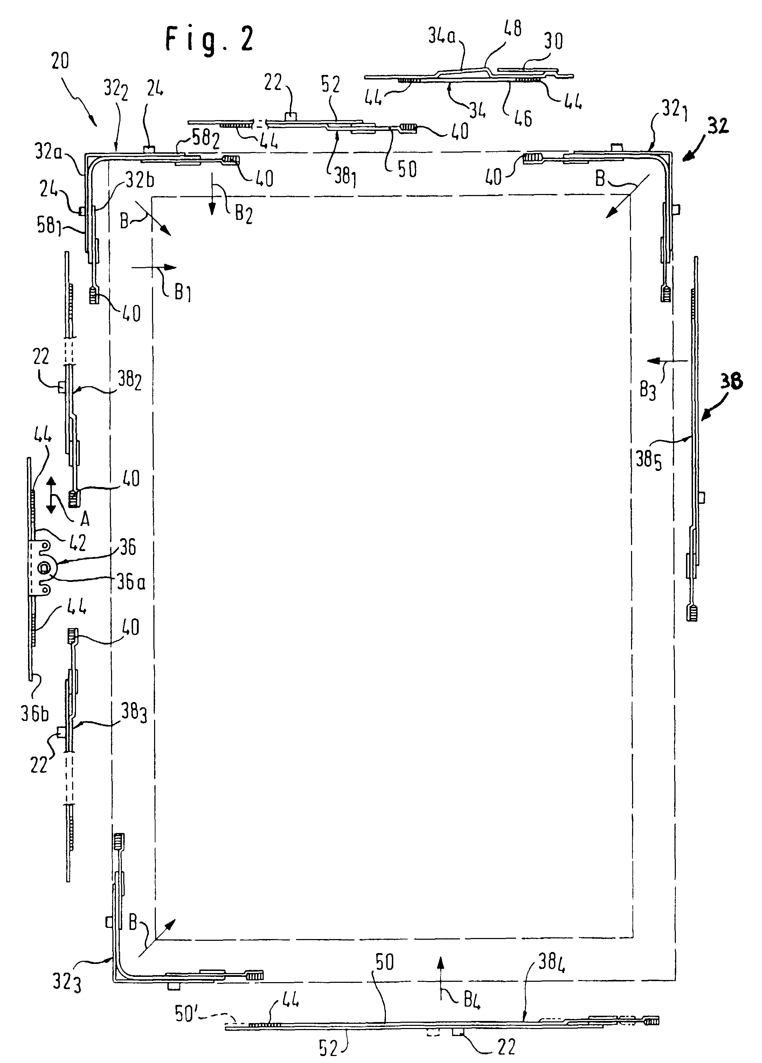

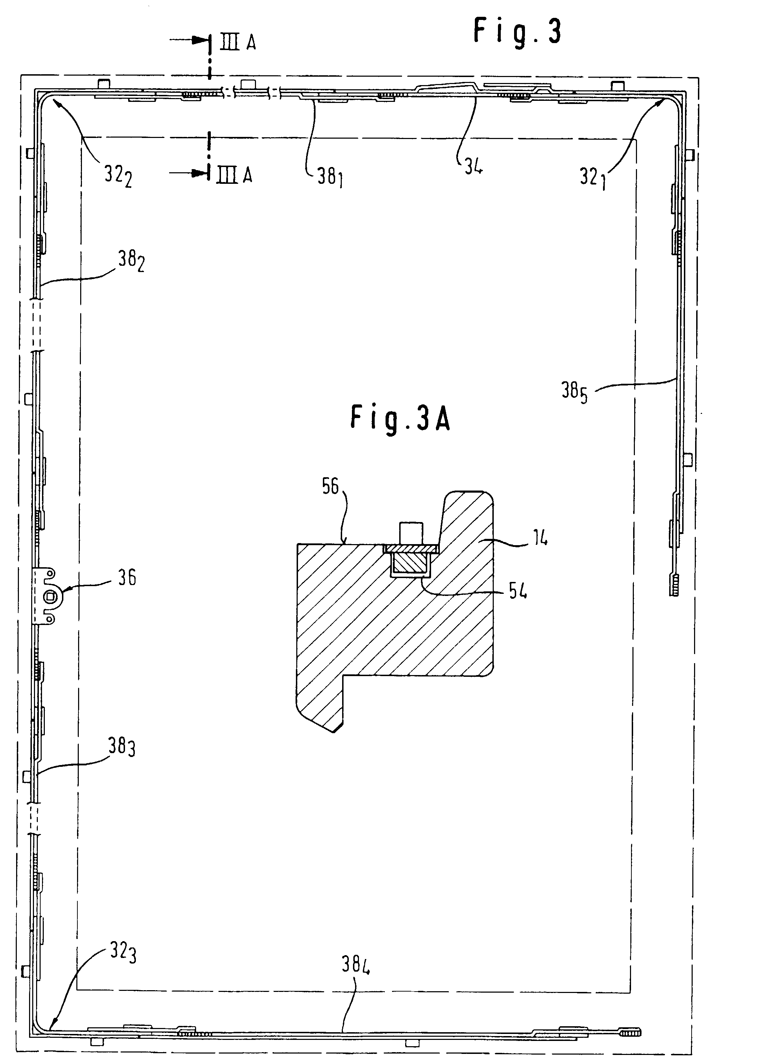

Im folgenden wird der Treibstangenbeschlag 20 in seinem Aufbau und seiner Montageweise näher erläutert. Dieser besteht aus insgesamt vier unterschiedlichen Elementen, nämlich Eckumlenkungen 32 (im Ausführungsbeispiel gemäß den Figuren 2 bis 5 sind dies drei Stück), einer Oberschiene 34, einem Treibstangen-Antriebselement in Form eines Treibstangen-Kantengetriebes 36 sowie diese miteinander verbindenden Verbindungseinheiten 38 (im Ausführungsbeispiel gemäß Figuren 2 und 3 sind dies fünf), wobei die obere Verbindungseinheit 38₁ sowie die beiden drehachsenfernen Verbindungseinheiten 38₂ und 38₃ aus Platzgründen teilweise abgebrochen dargestellt sind im Gegensatz zu den übrigen Verbindungseinheiten, der unteren Verbindungseinheit 38₄ sowie der drehachsenseitigen Verbindungseinheit 38₅.

Die demnach baugleichen Eckumlenkungen 32 können in ihrem grundsätzlichen Aufbau dem der Eckumlenkungen gemäß der DE 44 17 842 A1 entsprechen. Jedenfalls weisen sie jeweils einen ortsfesten Eckwinkel 32a auf sowie ein kraftübertragendes Treibelement 32b, dessen beide Enden jeweils ein Kupplungselement in Form einer nach außen hin offenen Zahnbettkupplung 40 aufweisen. Jede Eckumlenkung 32 trägt an beiden Schenkeln jeweils einen der bereits erwähnten Riegelvorsprünge 24, die mit dem Treibelement 32b bewegungsverkoppelt sind.

Das Treibstangen-Kantengetriebe 36 besteht aus einem Getriebegehäuse 36a, einer am Getriebegehäuse 36a starr angebrachten Stulpschiene 36b und einer Treibstange 42, die über ein nicht dargestelltes Antriebselement, insbesondere in Form eines Ritzels, innerhalb des Gehäuses 36a zur Hin- und Herbewegung in Treibstangenlängsrichtung A wahlweise antreibbar ist. Der Antrieb erfolgt entweder über den in Figur 1 angedeuteten Handgriff 18, dessen Vierkantwelle in das Ritzel einzuschieben ist, oder, in nicht dargestellter Weise, über einen Antriebsmotor, insbesondere Elektromotor. Die Treibstange 42 ist mit zwei jeweils als Kupplungsgegenelement in Form einer Kupplungsverzahnung 44 ausgebildeten Endabschnitten versehen. Diese sind komplementär ausgebildet zu den bereits erwähnten Zahnbettkupplungen 40.

Die bereits angesprochene Oberschiene 34 weist wiederum eine Stulpschiene 34a auf sowie eine an ihr hin und her verschieblich gelagerte Treibstange 46 wiederum mit Kupplungsverzahnungen 44 an beiden Enden. Die Stulpschiene 34a weist einen etwas nach auswärts geprägten Abschnitt 48 auf, in dem ein Langloch zur verschieblichen Lagerung des flügelrahmenseitigen Endes des Ausstellarms 28 ausgebildet ist. Man erkennt ferner den an der Stulpschiene 34a schwenkbar gelagerten Verbindungslenker 30.

Die Verbindungseinheiten 38 schließlich bestehen jeweils aus einer Treibstange 50, die an einer Stulpschiene 52 hin und her verschieblich gelagert ist. Die Verbindungseinheiten 38 tragen hier jeweils einen der bereits in Figur 1 angesprochenen Riegelvorsprünge 22. Diese durchsetzen eine entsprechendes Langloch der Stulpschiene 52 und sind mit der jeweiligen Treibstange 50 zur Mitbewegung verbunden. Im Gegensatz zu den bisher beschriebenen Teilen 32, 34 und 36 sind die Enden der Treibstangen 50 der Verbindungseinheiten 38 ungleich ausgebildet, nämlich mit der Zahnbettkupplung 40 an einer der beiden Enden und der Kupplungsverzahnung 44 am jeweils anderen Ende. Die Kupplungsverzahnung 44 erstreckt sich, wie in Figur 2 am unteren Verbindungseinheit 38₄ angedeutet ist, über eine etwas vergrößerte Länge, so daß ein Ablängen der jeweiligen Verbindungseinheit zur Anpassung an die gewünschte Rahmengröße im entsprechend großen Bereich möglich ist, wobei das abgelängte Ende der Treibstange 50 weiterhin verzahnt ist, um ohne weiteres mit der zugeordneten Zahnbettkupplung 40 verkuppelt zu werden. Damit Stulpschiene 52 und Treibstange 50 gemeinsam in einem Stück abgelängt werden können, wird die Treibstange 50 zweckmäßigerweise in die in Figur 2 unten strichliert angedeutete Schnittposition 50' relativ zur Stulpschiene 52 verschoben.

Sämtliche Zahnbettkupplungen 40 sind identisch ausgebildet wie auch die zu diesen komplementären Kupplungsverzahnungen 44, so daß eine wahlweise Kombination der genannten Elemente 32, 34, 36, 38 möglich ist. So können mit lediglich diesen vier genannten Elementen eine Vielzahl unterschiedlicher Fenstertypen mit beliebigen Abmessungen realisiert werden, wie nachfolgend noch anhand der Figuren 3, 4 und 5 erläutert wird.

Die vorstehend beschriebenen vier Elemente des Montagesatzes, nämlich die Eckumlenkungen 32, die Oberschiene 34, die Verbindungseinheiten 38 und die Treibstangen-Antriebseinheit in Form des Treibstangen-Kantengetriebes 36, werden wie folgt manuell oder auch mit Hilfe eines oder mehrerer Montageautomaten am jeweiligen Flügelrahmen 14 angeschlagen:

Als erstes werden die Eckumlenkungen 32 montiert, indem sie von außen her in eine bei Fenstern generell übliche abgestufte Aufnahmenut 54 in einer Rahmenfalz-Umfangsfläche 56 des Flügelrahmens 14 eingesetzt werden. Die Einsetzrichtung B kann gemäß Figur 2 angenähert diagonal in bezug auf den Flügelumriß orientiert sein. Man kann jedoch auch zuerst einen Schenkel 58₁ der beiden Schenkel 58 der Eckumlenkung in die Aufnahmenut 54 einsetzen mit Bewegung der Eckumlenkung 32 in Richtung B₁ senkrecht zur Rahmenfalz-Umfangsfläche 56, wobei dann anschließend der andere Schenkel 58₂ in die Aufnahmenut 54 eingeschoben wird mit Bewegung der Eckumlenkung 32 in zur Richtung B₁ senkrechter Richtung B₂. Anschließend werden die Eckumlenkungen 32 am Flügelrahmen 14 fixiert, beispielsweise mit Hilfe entsprechender Befestigungsschrauben (nicht dargestellt). Es sei hierzu wiederum verwiesen auf die DE 44 17 842 A1 sowie die EP 0 683 297 A1.

Anschließend werden die Verbindungseinheiten 38 montiert, die vorher, falls erforderlich, auf die beim jeweiligen Flügelrahmen 14 benötigte Länge abgelängt werden. Wie bereits vorstehend angesprochen, wird lediglich eines der beiden Enden der Verbindungseinheit 38 verkürzt, wobei ein gemeinsamer Schnitt durch Treibstange 50 und Stulpschiene 52 der Verbindungseinheit 38 möglich ist, falls beide Teile in entsprechende Relativposition (siehe Figur 2 unten) gebracht werden.

Die Verbindungseinheiten 38 werden jeweils in Richtung senkrecht zur zugeordneten Rahmenfalz-Umfangsfläche 56 dem Flügelrahmen 14 zugeführt und in die abgestufte Aufnahmenut 54 eingesetzt. In Figur 2 sind diese Richtungen mit B₁ bis B₄ bezeichnet. Die Zahnstangen 44 sind dabei, wie in Figur 2 dargestellt, in eine derartige Stellung gebracht, daß sie beim Einsetzen der Verbindungseinheit 38 unmittelbar in die nach außen hin offene Kupplungsverzahnung 44 der nächstliegenden Eckumlenkung 32 eindringen und dadurch den gegenseitigen Kupplungseingriff automatisch herstellen. Die jeweilige Stulpschiene 52 schließt mit ihrem eckumlenkungsseitigen Ende an den bereits angesprochenen Eckwinkel 32a der Eckumlenkung 32 an. Man erhält so eine optisch ansprechende durchgehende Abdeckung der abgestuften Nut 54. Mit Hilfe nicht dargestellter Befestigungsmittel, insbesondere Befestigungsschrauben, wird die jeweilige Verbindungseinheit 38 dann am Flügelrahmen 14 fixiert.

Dann werden das Treibstangen-Kantengetriebe 36 sowie die Oberschiene 34 angeschlagen. Auch hier erfolgt die Heranführung des jeweiligen Teils in die Aufnahmenut 54 wiederum in Richtung senkrecht zur jeweiligen Rahmenfalz-Umfangsfläche 56 (Richtungspfeile B1 bzw. B2 in Figur 2). Beim Einsetzen in die Aufnahmenut 54 gelangen auch hier die beiden Kupplungsverzahnungen 44 an den Enden der Treibstange 42 des Treibstangen-Kantengetriebes 36 wie auch die Kupplungsverzahnungen 44 an der Treibstange 46 der Oberschiene 34 selbsttätig in Kupplungseingriff mit den Zahnbettkupplungen 40 der sich jeweils beidseitig anschließenden Beschlagsteile, nämlich im Falle des Treibstangen-Kantengetriebes 36 der beiden Verbindungseinheiten 38₂ und 38₃ und im Falle der Oberschiene 34 der Verbindungseinheit 38₁ sowie der Eckumlenkung 32₁. Anschließend wird das Kantengetriebe 36 wiederum am Flügel 14 fixiert ebenso wie die Oberschiene 34.

Man erhält somit einen mit einem kompletten Treibstangenbeschlag 20 versehenen Flügelrahmen 14 mit folgenden miteinander verkoppelten Teilen: Verbindungseinheit 38₅, Eckumlenkung 32₁, Oberschiene 34, Verbindungseinheit 38₁, Eckumlenkung 32₂, Verbindungseinheit 38₂, Treibstangen-Kantengetriebe 36, Verbindungseinheit 38₃, Eckumlenkung 32₃ und Verbindungseinheit 38₄ (Aufzählung entgegen dem Uhrzeigersinn in Figur 3).

Zur Fertigstellung des Fensters muß der Flügelrahmen 14 lediglich mit dem Festrahmen 12 verbunden werden, indem das in Figur 3 rechte untere Flügeleck auf das festrahmenseitige Teil des dortigen Eckgelenks aufgesetzt wird und der am Festrahmen 14 angelenkte Ausstellarm 28 mit der Stulpschiene 34a und dem Verbindungslenker 30 der Oberschiene 34 verbunden wird. Ferner muß noch der Handgriff 18 aufgesetzt werden.

Wie bereits erwähnt, setzt das beschriebene Beschlagsystem lediglich vier unterschiedliche Teile ein. Bei einer vollautomatischen Montage werden demnach nur vier Magazine, jeweils eines für die Eckumlenkungen, die Oberschienen, die Verbindungseinheiten und die Treibstangen-Kantengetriebe benötigt. Die Ablängung der Verbindungseinheiten 38 entsprechend den aktuellen Abmessungen des zu beschlagenden Flügelrahmens 14 kann ebenfalls automatisch vorgenommen werden, da die Flügelabmessungen von vorneherein bei der Programmierung der Fertigungsstraße eingegeben werden.

Abweichend von den Figuren 2 und 3 können die genannten vier unterschiedlichen Teile des Montagesatzes auch anders zusammengestellt werden, um unterschiedlichen Anforderungen an die Bedienbarkeit sowie unterschiedlichen Fenstergrößen Rechnung zu tragen. Die Variationsfreiheit ist deshalb so groß, weil zum einen Kantengetriebe 36 und Oberschiene 34 mit ihren Anschlußenden (Kupplungsverzahnungen 44) wahlweise unmittelbar mit den Zahnbettkupplungen 40 der Verbindungseinheit 38 oder der Eckumlenkungen 32 verkuppelt werden können und zum anderen zwischen Kantengetriebe 36 und Oberschiene und den Eckumlenkungen 32 wahlweise auch mehr als zwei Verbindungseinheiten 38 zwischengeschaltet werden können.

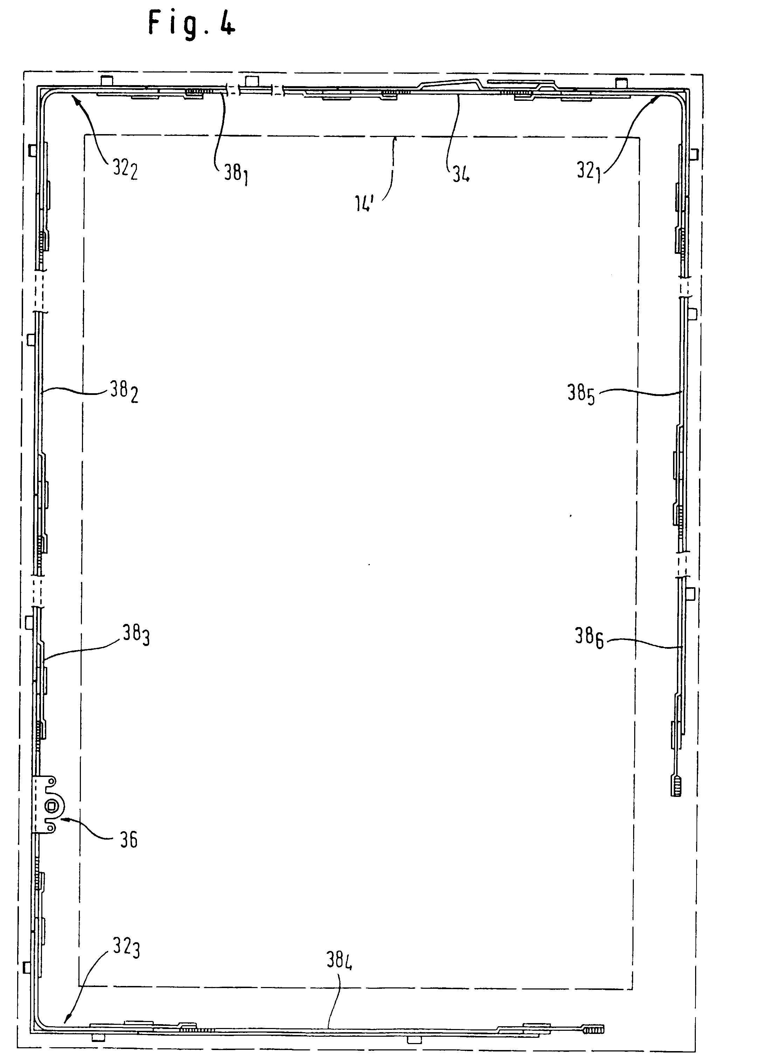

In Figur 4 ist ein Flügelrahmen 14' angedeutet, der in seinen Abmessungen dem Flügelrahmen 14 gemäß Figur 3 entspricht und bei dem auch die gleiche Anzahl an Teilen des Treibstangenbeschlags 20 eingesetzt wird. Unterschiedlich ist lediglich, daß das Treibstangen-Kantengetriebe 36 nunmehr an die drehachsenferne untere Eckumlenkung 32₃ herangerückt ist. Dies mag dann zweckmäßig sein, wenn das entsprechende Fenster relativ hoch eingebaut ist, so daß der Handgriff 18 dementsprechend niedriger anzuordnen ist. Vergleicht man mit der Anordnung gemäß Figur 3, erkennt man, daß die Verbindungseinheit 38₃ nicht mehr unterhalb des Kantengetriebes 36 angeordnet ist, sondern oberhalb. Der übrige Aufbau ist, bis auf eine zusätzliche Verbindungseinheit 38₆ am unteren Ende der Verbindungseinheit 38₅ auf der Drehachsenseite, unverändert.

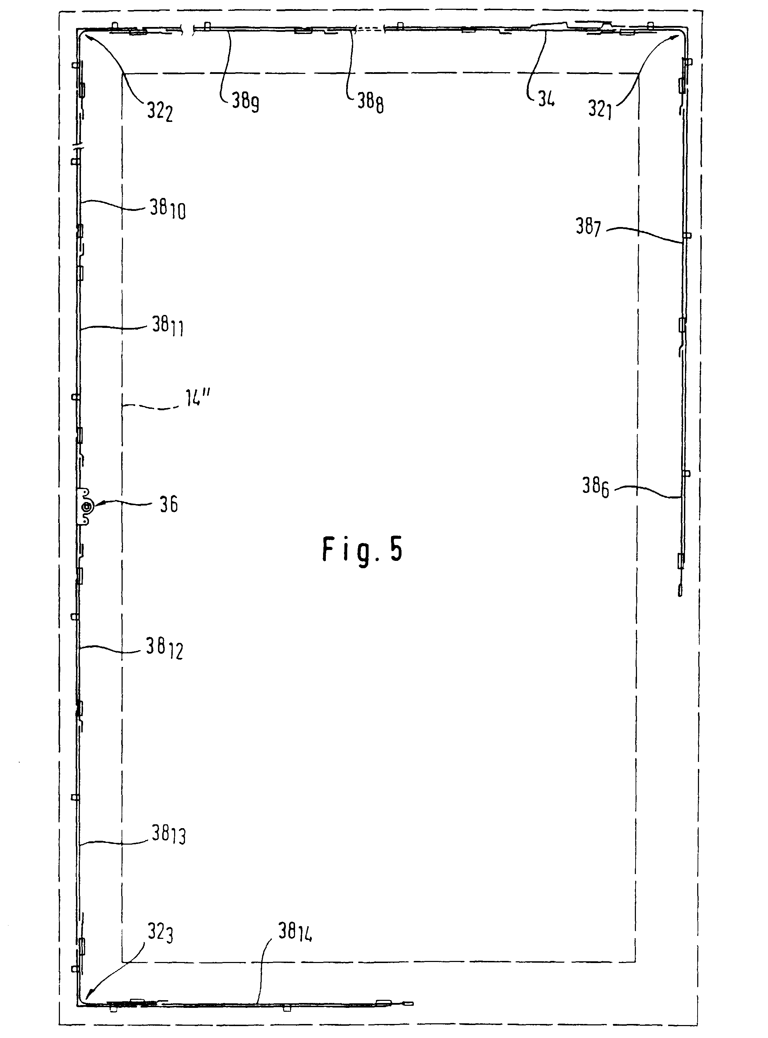

Figur 5 zeigt den Anwendungsfall eines Flügelrahmens 14" mit Übermaß. Man erkennt hier, daß im Vergleich zur Anordnung gemäß Figur 3 die dortigen einzelnen Verbindungseinheiten 38₁ bis 38₅ jeweils durch Paare von Verbindungseinheiten ersetzt sind. Man erhält damit folgenden Aufbau, wobei die Teile wiederum entgegen dem Uhrzeigersinn in Figur 5 aufgezählt sind: Verbindungseinheiten 38₆ und 38₇; Eckumlenkung 32₁; Oberschiene 34; Verbindungseinheiten 38₈ und 38₉; Eckumlenkung 32₂; Verbindungseinheiten 38₁₀, 38₁₁; Treibstangen-Kantengetriebe 36; Verbindungseinheiten 38₁₂, 38₁₃; Eckumlenkung 32₃ und (lediglich eine) Verbindungseinheit 38₁₄.

Es sind, wie gesagt, auch andere Kombinationen mit Vorteil einsetzbar. Aufgrund der geringen Anzahl unterschiedlicher Systemteile ist die Herstellung sowie die Montage entscheidend vereinfacht. Die Materialausnutzung ist hoch, da keine größeren Überlängen abzuschneiden sind. Gegebenenfalls kann der Materialverlust beim Ablängen noch weiter reduziert werden, indem zusätzlich auch kürzere Verbindungseinheiten 38 bereitgehalten werden. Bei nicht allzuvielen Standardabmessungen ist ein Baukastensystem denkbar, bei dem überhaupt kein Verschnitt vorkommt. Die Vorteile der Erfindung bleiben weitgehend erhalten, wenn die Verbindungseinheiten nicht in einer einzigen Länge bereitgehalten werden, sondern in zwei oder mehr Standardmaßen.

## Patentansprüche

1. Treibstangenbeschlag-Montagesatz für den Flügel (14) eines Dreh-Kipp-Fensters (10) oder einer Dreh-Kipp-Tür, umfassend
- identische winkelförmige Eckumlenkungen (32₁ - 32₃) für beliebige Flügelecken mit beidendig jeweils einem Kupplungselement an einem kraftübertragenden Treibelement (32b) der Eckumlenkung (32), welches zur Verkopplung mit einem auf der Winkelaußenseite heranführbaren Kupplungsgegenelemenn ausgebildet ist,
- eine Oberschiene (34) zum Zusammenwirken mit einer Ausstelleinrichtung, insbesondere Ausstellschere (26), mit beidendig jeweils einem Kupplungsgegenelement an einer Treibstange (46) der Oberschiene (34),
- ein Treibstangen-Antriebselement, insbesondere Treibstangen-Kantengetriebe (36), mit beidseitic jeweils einem Kupplungsgegenelement einer Treibstange (42) des Treibstangen-Antriebselements
wobei alle Kupplungselemente und alle Kupplungsgegenelemente jeweils identisch ausgebildet sind
**gekennzeichnet durch**
- identische, einseitig ablänabare Verbindungseinheiten (38₁ - 38₁₄) zur wahlweisen Verbindung mit Treibstangen-Antriebselement, Eckumlenkung (32) und Oberschiene (34) mit einem Kupplungselement am nicht ablängbaren Ende und Kupplungsgegenelement am ablängbaren Ende einer Treibstange (50) der Verbindungseinheit (38₁ - 38₁₄).

2. Montagesatz nach Anspruch 1, dadurch gekennzeichnet, daß das Kupplungselement der Eckumlenkung von einer zur Winkelaußenseite hin offenen Zahnbettkupplung (40) und das Kupplungsgegenelement von einer ablängbaren Kupplungsverzahnung (44) gebildet ist.

3. Montagesatz nach einem der vorhergehenden Ansprüche, dadurch gekennzeichnet, daß die Verbindungseinheit (38₁ - 38₁₄) wenigstens einen treibstangenfesten Riegelvorsprung (22) aufweist.

4. Dreh-Kipp-Fenster (10) oder Dreh-Kipp-Tür, versehen mit einem Treibstangenbeschlag-Montagesatz (20) gemäß einem der vorhergehenden Ansprüche.

5. Dreh-Kipp-Fenster (10) oder Dreh-Kipp-Tür nach Anspruch 4, dadurch gekennzeichnet, daß es wenigstens folgende Teile aufweist, die, aufeinanderfolgend, miteinander gekuppelt sind:
- eine drehachsenseitige obere Eckumlenkung (32₁),
- eine Oberschiene (34),
- ein erste Verbindungseinheit (38₁),
- eine drehachsenferne obere Eckumlenkung (32₂),
- ein zweite Verbindungseinheit (38₂),
- eine Treibstangen-Antriebseinheit (36),
- ein dritte Verbindungseinheit (38₃),
- eine drehachsenferne untere Eckumlenkung (32₃).

6. Fenster oder Tür nach Anspruch 4, dadurch gekennzeichnet, daß es wenigstens zwei unmittelbar aufeinanderfolgende und miteinander gekoppelte Verbindungseinheiten (38₁- 38₁₄) aufweist (Fig. 5).

7. Fenster oder Tür nach Anspruch 5, dadurch gekennzeichnet, daß die Treibelement-Antriebseinheit mit der oberen oder mit der unteren drehachsenfernen Eckumlenkung (32) unmittelbar verbunden ist und mit der unteren bzw. oberen drehachsennahen Eckumlenkung über wenigstens ein, vorzugsweise zwei Verbindungseinheiten (38₁ - 38₁₄) verbunden ist (Fig. 4)

8. Verfahren zur Montage des Montagesatzes gemäß einem der Ansprüche 1 bis 3, wobei zuerst alle Eckumlenkungen (32) montiert werden, daß dann alle entsprechend den jeweiligen Flügelabmessungen einseitig abgelängten Verbindungseinheiten (38₁- 38₁₄) montiert werden und daß schließlich die Oberschiene (34) und die Treibstangen-Antriebseinheit montiert werden.

9. Verfahren nach Anspruch 8, dadurch gekennzeichnet, daß die Eckumlenkungen (32), die Verbindungseinheiten (38₁ - 38₁₄), die Oberschiene (34) und die TreibstangenAntriebseinheit (36) von außen her (Richtungen B, B₁-B₄) in eine Aufnahmenut (54) in der Rahmenfalz-Umfangsfläche (56) des Flügels (14) eingesetzt werden.

10. Verfahren nach Anspruch 8 oder 9, dadurch gekennzeichnet, daß ein Montageautomat eingesetzt wird mit lediglich vier Magazinen für die Eckumlenkungen (32), die Oberschienen (34), die Verbindunzseinheiten (38₁ - 38₁₄) und die Treibstangen-Antriebseinheiten (36).

## Claims

1. A connecting rod fitting mounting set for the wing or leaf (14) of a pivot-and-tilt window (10) or a pivot-and-tilt door, comprising
- identical angular corner deflection means (32₁ - 32₃) for any leaf or wing corners, with a coupling element at each end on a force-transmitting driving element (32b) of the corner deflection means (32), which driving element (32b) is constructed so as to be couplable to a counter coupling element which may brought near to the outside of the angle,
- an upper rail (34) for interaction with a hook-out means, in particular a scissor-action hook-out means (26), with a counter coupling element at each end on a connecting rod (46) of the upper rail (34),
- a connecting rod drive element, in particular connecting rod edge gearing (36), with a counter coupling element of a connecting rod (42) of the connecting rod drive element on each side
all the coupling elements and all the counter coupling elements being of identical construction,
characterised by
- identical connecting units (38₁- 38₁₄), of reducible length, for selective connection with connecting rod drive element, corner deflection means (32) and upper rail (34), with a coupling element at the non-reducible end and a counter coupling element at the reducible end, of a connecting rod (50) of the connecting unit (38₁ - 38₁₄).

2. A mounting set according to claim 1, characterised in that the coupling element of the corner deflection means takes the form of a toothed bed coupling (40) open towards the outside of the angle and the counter coupling element takes the form of a toothed coupling member of reducible length (44).

3. A mounting set according to either one of the preceding claims, characterised in that the connecting unit (38₁ - 38₁₄) comprises at least one bolt projection (22) fixed to the connecting rod.

4. A pivot-and-tilt window (10) or pivot-and-tilt door, provided with a connecting rod fitting mounting set (20) according to one of the precharacterising claims.

5. A pivot-and-tilt window (10) or pivot-and-tilt door according to claim 4, characterised in that it comprises at least the following parts, which are coupled together in succession:
- an upper corner deflection means (32₁) on the pivot axis side,
- an upper rail (34),
- a first connecting unit (38₁),
- an upper corner deflection means (32₂) remote from the pivot axis,
- a second connecting unit (38₂),
- a connecting rod drive unit (36),
- a third connecting unit (38₃),
- a lower corner deflection means (32₃) remote from the pivot axis.

6. A window or door according to claim 4, characterised in that it comprises at least two directly successive connecting units (38₁- 38₁₄) coupled together (Fig. 5).

7. A window or door according to claim 5, characterised in that the driving element drive unit is connected directly to the upper or the lower corner deflection means (32) remote from the pivot axis and to the lower or upper corner deflection means close to the pivot axis via at least one, preferably two, connecting units (38₁ - 38₁₄) (Fig. 4).

8. A method of mounting the mounting set according to any one of claims 1 to 3, wherein firstly all the corner deflection means (32) are mounted, then all the connecting units (38₁- 38₁₄) are mounted, their lengths having been reduced on one side to correspond to the respective wing or leaf dimensions, and finally the upper rail (34) and the connecting rod drive unit are mounted.

9. A method according to claim 8, characterised in that the corner deflection means (32), the connecting units (38₁ - 38₁₄), the upper rail (34) and the connecting rod drive unit (36) are inserted from outside (directions B, B₁ - B₄) into a receiving groove (54) in the circumferential frame rebate surface (56) of the wing or leaf (14).

10. A method according to claim 8 or claim 9, characterised in that an automatic mounting machine is used, which comprises only four magazines for the corner deflection means (32), the upper rails (34), the connecting units (38₁- 38₁₄) and the connecting rod drive units (36).

## Revendications

1. Ensemble de montage de ferrure à bielle destiné au vantail (14) d'une fenêtre oscillo-battante (10) ou d'une porte oscillo-battante comprenant:
- des renvois d'angle (32₁ à 32₃) identiques en équerre pour des coins quelconques du vantail avec à chaque fois, aux deux extrémités, un élément d'accouplement à un élément de manoeuvre (32b) transmetteur d'effort du renvoi d'angle (32) qui est conçu pour être accouplé à un contre-élément d'accouplement pouvant être approché sur le côté extérieur de l'équerre,
- un rail supérieur (34) destiné à coopérer avec un dispositif d'ouverture, notamment des ciseaux (26), avec aux deux extrémités à chaque fois un contre-élément d'accouplement à une bielle (46) du rail supérieur (34),
- un élément d'entraînement de la bielle, notamment un mécanisme de bord de la bielle (36), avec sur les deux côtés un contre-élément d'accouplement d'une bielle (42) de l'élément d'entraînement de la bielle,
tous les éléments d'accouplement et tous les contre-éléments d'accouplement étant identiques,
caractérisé par
- des unités de liaison (38₁ à 38₁₄) identiques pouvant être mises à longueur d'un côté, pour la liaison au choix avec l'élément d'entraînement de la bielle, le renvoi d'angle (32) et le rail supérieur (34) à un élément d'accouplement à l'extrémité qui ne peut être mise à longueur et à un contre-élément d'accouplement à l'extrémité qui peut être mise à longueur d'une bielle (50) de l'unité de liaison (38₁ à 38₁₄).

2. Ensemble de montage selon la revendication 1, caractérisé en ce que l'élément d'accouplement du renvoi d'angle est formé par un accouplement à crémaillère (40) ouvert vers le côté extérieur de l'équerre et le contre-élément d'accouplement est formé par une denture d'accouplement (44) qui peut être mise à longueur.

3. Ensemble de montage selon l'une des revendications précédentes, caractérisé en ce que l'unité de liaison (38₁ à 38₁₄) comporte au moins une saillie de verrouillage (22) solidaire de la bielle.

4. Fenêtre oscillo-battante (10) ou porte oscillo-battante pourvue d'un ensemble de montage (20) de ferrure à bielle selon l'une des revendications précédentes.

5. Fenêtre oscillo-battante (10) ou porte oscillo-battante selon la revendication 4, caractérisée en ce qu'elle comporte au moins les éléments suivants qui sont successivement accouplés entre eux :
- un renvoi d'angle supérieur (32₁) côté axe de rotation,
- un rail supérieur (34),
- une première unité de liaison (38₁),
- un renvoi d'angle supérieur (32₂) éloigné de l'axe de rotation,
- une deuxième unité de liaison (38₂),
- une unité d'entraînement de la bielle (36),
- une troisième unité de liaison (38₃),
- un renvoi d'angle inférieur (32₃) éloigné de l'axe de rotation.

6. Fenêtre ou porte selon la revendication 4, caractérisée en ce qu'elle comporte au moins deux unités de liaison (38₁ à 38₁₄) se succédant directement et accouplées entre elles (fig. 5).

7. Fenêtre ou porte selon la revendication 5, caractérisée en ce que l'unité d'entraînement de l'élément de manoeuvre est directement reliée au renvoi d'angle supérieur ou inférieur (32) éloigné de l'axe de rotation et est reliée au renvoi d'angle proche de l'axe de rotation respectivement inférieur ou supérieur, par au moins une, de préférence deux, unités de liaison (38₁ à 38₁₄) (fig. 4).

8. Procédé de montage de l'ensemble de montage selon l'une des revendications 1 à 3, dans lequel tous les renvois d'angle (32) sont montés en premier, toutes les unités de liaison (38₁ à 38₁₄) mises à longueur d'un côté suivant les dimensions respectives du vantail sont ensuite montées et le rail supérieur (34) ainsi que l'unité d'entraînement de la bielle sont enfin montés.

9. Procédé selon la revendication 8, caractérisé en ce que les renvois d'angle (32), les unités de liaison (38₁ à 38₁₄), le rail supérieur (34) et l'unité d'entraînement de la bielle (36) sont insérés de l'extérieur (sens B, B₁ à B₄) dans une rainure formant logement (54) pratiquée dans la surface périphérique de feuillures de châssis (56) du vantail (14).

10. Procédé selon la revendication 8 ou 9, caractérisé en ce qu'on utilise une machine automatique de montage avec seulement quatre magasins pour les renvois d'angle (32), les rails supérieurs (34), les unités de liaison (38₁ à 38₁₄) et les unités d'entraînement (36) de la bielle.
